# EUROPÄISCHE PATENTANMELDUNG

(11) **EP 1 900 561 A2**
(43) Veröffentlichungstag der Anmeldung: **19.03.2008**
(21) Anmeldenummer: 07015438.0
(22) Anmeldetag: 07.08.2007
(51) Int. Cl.: B60J 7/12

(54) **Verdeck für ein Cabriolet**

(30) Priorität: 08.09.2006 DE 102006042259
(71) Anmelder: Dr.Ing. h.c. F. Porsche Aktiengesellschaft, 70435 Stuttgart (DE)
(72) Erfinder: Beierl, Dominik, 70825 Korntal-Münchingen (DE); Hermann, Felix, 71229 Leonberg (DE); Schulz, Lars, 15566 Schöneiche (DE); Bronda, Angelo, 71287 Weissach (DE)

(57) **Zusammenfassung**

Die vorliegende Erfindung betrifft ein Verdeck (1) für ein Cabriolet, dass zumindest folgende Komponenten aufweist: Jeweils seitlich ein, einen seitlichen Dachrahmen (2) bildendes Verdeckgestänge (3) und einen, bei geschlossenem Verdeck (1) aufgespannten, flexiblen Überzug (4), der zumindest Teile der Verdecks (1) überzieht. Erfindungswesentlich ist dabei, dass bei geschlossenem Verdeck (1) zwischen einem, dem zugehörigen seitlichen Dachrahmen (2) zugewandten und ausgesteiften Bereich (5) des aufgespannten Überzugs (4) und den zugehörigen seitlichen Dachrahmen (2) eine Dichtung (6) angeordnet ist.

## Beschreibung

Die vorliegende Erfindung betrifft ein Verdeck für ein Cabriolet, welches in einem rückwärtigen Bereich des Cabriolets ablegbar ist, gemäß dem Oberbegriff des Anspruchs 1.

Cabriolets weisen üblicherweise öffnungsfähige Dächer, im allgemeinen so genannte Hardtops oder Softtop-Verdecke auf. Bei beiden Varianten stellen Abdichtungen, welche zwischen dem Verdeck und einem Verdeckgestänge bzw. dem übrigen Cabriolet vorgesehen sind potentielle Schwachpunkte dar. Da bei einer reduzierten Dichtwirkung der Dichtungen neben unangenehmer Zugluft auch ein Eintrag von Straßenlärm in ein Fahrzeuginneres den Fahrkomfort des Cabriolets deutlich beeinträchtigen kann, ist es besonders wichtig, diese Dichtungen derart auszubilden, dass sie einerseits zuverlässig und dicht schließend sind und andererseits die Dichtfunktion über lange Zeit erhalten bleibt.

Aus der EP 0 713 794 B1 ist ein Faltverdeck für Fahrzeuge bekannt, welches sich aus einem Verdeckgestell und einem Verdeckbezug zusammensetzt. An seitlichen Rahmenteilen des Verdeckgestells sind dabei der Verdeckbezug und Dichtleisten in Lage gehalten, wobei die Anbindungen für den Verdeckbezug und die Dichtleisten getrennt voneinander an den seitlichen Rahmenteilen des Verdeckgestells vorgesehen sind. Durch diese räumliche Trennung der Befestigungen für den Verdeckbezug einerseits und die Dichtleisten andererseits soll ein Auswechseln eines beschädigten Verdeckbezugs erleichtert werden, da lediglich die Dichtleisten aus entsprechend zugehörigen Halteschienen entfernt werden müssen.

Die vorliegende Erfindung beschäftigt sich mit dem Problem, für ein Verdeck der gattungsgemäßen Art eine verbesserte oder zumindest eine andere Ausführungsform anzugeben, welche durch eine bessere Dichtwirkung der am Verdeck angeordneten Dichtungen an Fahrtkomfort des Cabriolets erhöht.

Erfindungsgemäß wird dieses Problem durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, bei einem Verdeck mit einem, einen seitlichen Dachrahmen bildenden Verdeckgestänge und einem aufspannbaren flexiblen Überzug, seitliche Bereiche des flexiblen Überzugs auszusteifen und zwischen diesen ausgesteiften Bereichen und dem, den seitlichen Dachrahmen bildenden Verdeckgestänge eine Dichtung vorzusehen. Hierdurch kann eine vordefinierte und vorbestimmbare Dichtwirkung erzielt werden, da die Dichtung nunmehr zwischen zwei steifen Bereichen, nämlich dem ausgesteiften Bereich am Überzug und dem seitlichen Dachrahmen angeordnet ist und dadurch im Vergleich zu herkömmlichen Cabriolets, welche im Bereich des flexiblen Überzugs nicht versteift sind, eine bessere und dadurch dichte Anlage der Dichtung an den Überzug erlauben. Die ausgesteiften, seitlichen Bereiche des Überzugs sind dabei dem jeweils zugehörigen seitlichen Dachrahmen zugewandt. Diese neuartige Art der Abdichtung bietet den Vorteil, definierte und ausgesteifte Dichtbereiche durch eine zwischenliegende Dichtung abdichten zu können und dadurch die Dichtwirkung im Vergleich zu einem herkömmlichen Verdeck mit nicht ausgesteiften seitlichen Bereichen erhöhen zu können.

Zweckmäßig weist das Verdeck den Überzug flächig aufspannende und aussteifende Spannelemente auf. Derartige flächige Spannelemente können beispielsweise in der Art eines Integraldachrahmens und/oder in der Art von so genannten Flächenspriegeln ausgebildet sein und den an sich flexiblen Überzug bei geschlossenem Verdeck in eine stets gleiche Dachaußenkontur zwingen. Gleichzeitig kann durch derartige Spannelemente das Verdeck an sich steifer ausgebildet werden, wodurch sich insbesondere der Schallschutz im Innenraum des Cabriolets verbessert.

Bei einer vorteilhaften Weiterbildung der erfindungsgemäßen Lösung weist die Dichtung zumindest eine, dem ausgesteiften seitlichen Bereich des Überzugs zugewandte Dichtlippe auf. Derartige Dichtlippen sind bekanntermaßen flexibel und legen sich bei geschlossenem Verdeck dichtend an den ausgesteiften seitlichen Bereich des Überzugs an. Sind nunmehr beispielsweise mehrere Dichtlippen vorgesehen, so kann die Dichtwirkung auf konstruktiv denkbar einfache Weise verbessert werden.

Bei einer weiteren vorteilhaften Ausführungsform der erfindungsgemäßen Lösung weist die Dichtung zumindest eine, deren Elastizität erhöhende Kammer auf. Eine derartige Kammer stellt somit eine Art Hohlraum dar, welche einen Querschnitt der Dichtung im Bereich der Kammer schwächt und dadurch die Dichtung im diesem Bereich flexibler werden lässt. Gleichzeitig kann damit auch eine Gewichtsersparnis erzielt werden, was insbesondere im Bereich des Sportwagenbaus von Bedeutung ist. Vorrangig soll jedoch die Elastizität mit einer derartigen Kammer erhöht werden, wodurch allgemein die Dichtwirkung der Dichtung verbessert wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine Seitenansicht auf ein erfindungsgemäßes Verdeck im Bereich eines seitlichen Dachrahmens,
- Fig. 2: eine Schnittdarstellung gemäß der Schnittebene II-II,
- Fig. 3: eine Schnittdarstellung gemäß der Schnittebene III-III.

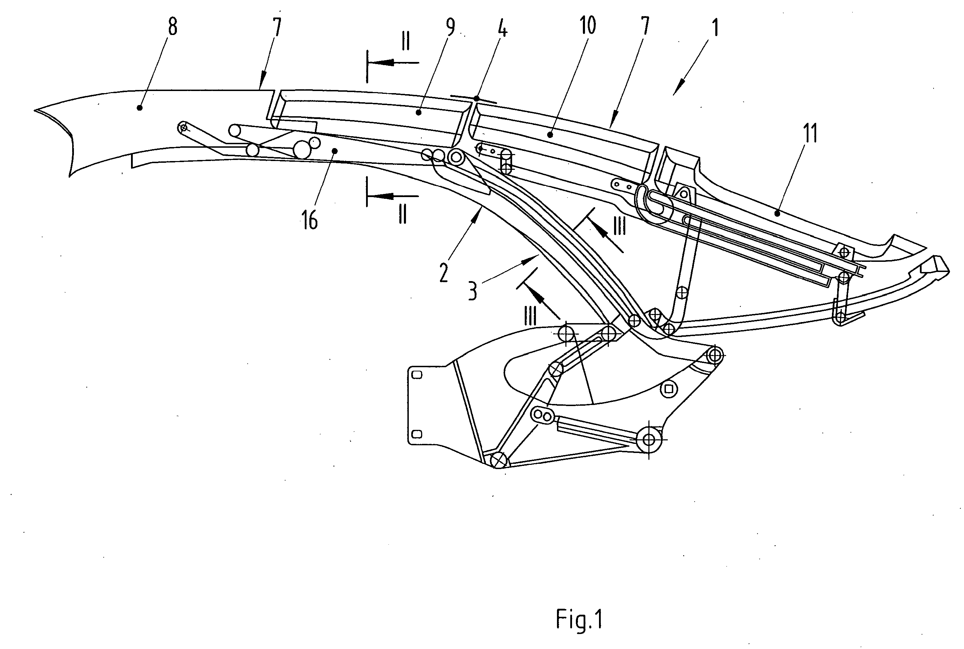

Entsprechend Fig. 1 ist ein zu öffnendes Verdeck 1 eines im übrigen nicht gezeigten Cabriolets dargestellt, welches in einem rückwärtigen Bereich des Cabriolets, insbesondere in einem nicht gezeigten Verdeckkasten, ablegbar ist. Das Verdeck 1 weist dabei zumindest folgende Komponenten auf: Ein, einen seitlichen Dachrahmen 2 bildendes Verdeckgestänge 3, welches jeweils seitlich am Verdeck 1 angeordnet ist sowie einen, das Verdeck 1 zumindest teilweise überziehenden Überzug 4. Das seitlich angeordnete Verdeckgestänge 3 ist dabei als Antriebsgestänge ausgebildet und bewirkt bei einem Verschwenken desselben eine für das erfindungsgemäße Verdeck 1 spezifische Öffnungskinematik, auf welche im Folgenden noch näher eingegangen wird. Generell bildet der Überzug 4 bei geschlossenem Verdeck 1 eine durchgehende Dachkontur und ist vorzugsweise wasserabweisend und insbesondere schalldämpfend ausgebildet, wodurch einerseits Straßenlärm und andererseits äußere Witterungseinflüsse von einem Innenraum des Cabriolets abgeschirmt werden können.

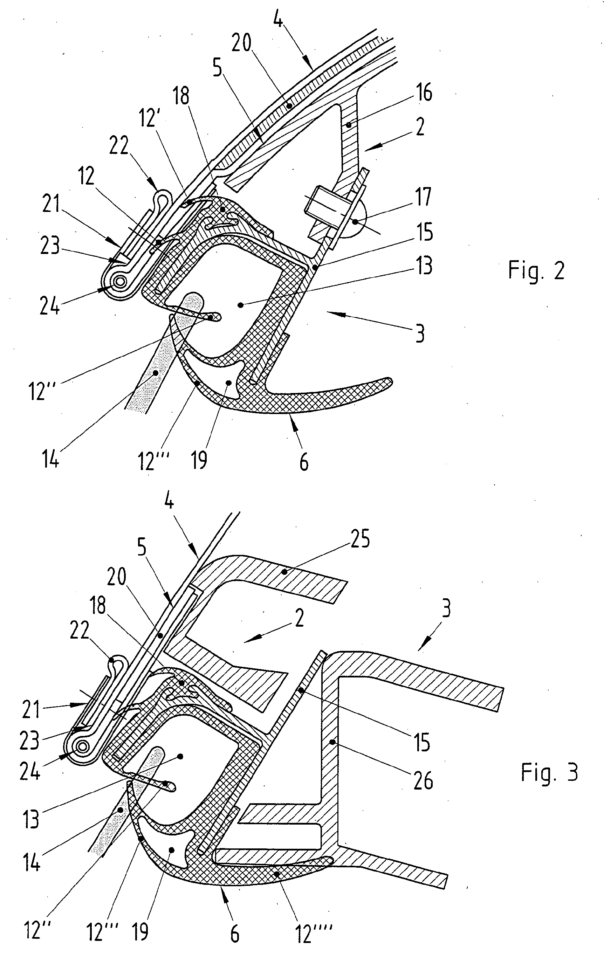

Erfindungsgemäß weist nun der Überzug 4 des Verdecks 1 ausgesteifte, seitliche Bereiche 5 auf, die dem zugehörigen seitlichen Dachrahmen 2 zugewandt sind (vgl. Fig. 2 und 3). Zwischen diesen ausgesteiften Bereichen des bei geschlossenem Verdeck aufgespannten Überzugs 4 und dem zugehörigen seitlichen Dachrahmen 2, also dem Verdeckgestänge 3, ist nun erfindungsgemäß eine Dichtung 6 angeordnet, welche ebenfalls eine außerhalb des Cabriolets herrschende Lärmbelastung von einem Innenraum des Cabriolets abschirmen soll und andererseits insbesondere beim Betrieb des Cabriolets den Fahrtwind, d.h. Zugluft, vom Cabrioletinnenraum fernhalten soll.

Wie der Fig. 1 zu entnehmen ist, weist das Verdeck 1 den Überzug 4 flächig aufspannende und gleichzeitig aussteifende Spannelemente 7 auf, wobei das Verdeck 1 gemäß der Fig. 1 insgesamt vier, den Überzug 4 flächig aufspannende Spannelemente 7 besitzt. Dabei ist das in Fahrtrichtung vorderste Spannelement 7 als Integraldachrahmen 8 ausgebildet, während die direkt dahinter gelegenen Spannelemente 7 als erster Flächenspriegel 9 und zweiter Flächenspriegel 10 ausgebildet sind. Das sich in Fahrtrichtung hinter dem zweiten Flächenspriegel 10 anschließende Spannelement 7 ist als Heckscheibenrahmen 11 mit einer Aufnahme für eine Heckscheibe ausgebildet. Wird das Verdeck 1 geöffnet, so liegen der Integraldachrahmen 8 und der erste Flächenspriegel 9 oberhalb des Heckscheibenrahmens 11, während der zweite Flächenspriegel 10 unterhalb des Heckscheibenrahmens 11 abgelegt ist. Diese Art des aufeinander Stapelns der einzelnen Spannelemente 7 bei abgelegtem Verdeck 1 ermöglicht einen vorteilhaften Package-Effekt und dadurch eine Bauraum minimierende Ablegeposition des Verdecks 1.

Gemäß den Fig. 2 und 3 weist die Dichtung 6 zumindest eine, hier jeweils zwei, dem ausgesteiften seitlichen Bereich 5 des Überzugs 4 zugewandte Dichtlippen 12, 12' auf. Dabei sind die Dichtlippen 12, 12' in ihrer entspannten Lage gezeichnet, wobei klar ist, dass diese sich elastisch an den seitlichen Bereich 5 anlegen. Desweiteren weist die Dichtung 6 zwei sich im Bereich einer dachrahmenseitigen Aufnahme 13 gegenüberliegende Dichtlippe 12", 12"' auf, welche die dachrahmenseitige Aufnahme 13 verschließen und welche sich bei geschlossener Seitenscheibe 14 innen und außen an diese anlegen. Die Seitenscheibe 14 dringt dabei unter einem elastischen Verbiegen der beiden Dichtlippen 12", 12'" beim Schließen der Seitenscheibe 14 in die Aufnahme 13 ein. Dabei ist in den Schnittebenen II-II und III-III die Aufnahme 13 jeweils U-förmig ausgebildet.

Gemäß der Fig. 2 ist ein Strangpressprofil 15, welches im wesentlichen die Aufnahme 13 bildet, an ein Zwischenstück 16 des ersten Flächenspriegels 9 angeschraubt. Die Schraubverbindung lässt dabei sowohl eine Höhen- als auch eine Querverschiebung bezüglich einer Schraubenachse 17 zu, so dass das Strangpressprofil 15 bezüglich des Zwischenstücks 16 ausrichtbar ist. Dabei wird deutlich, dass bei den Darstellungen gemäß der Fig. 2 und gemäß der Fig. 3 die Dichtung 6 das, die dachrahmenseitige Aufnahme 13 für die Seitenscheibe 14 bildende Strangpressprofil 15 formschlüssig umgreift. Zusätzlich kann die Dichtung 6 über ein Hinterschnittprofil 18, beispielsweise eine Schwalbenschwanzverbindung, mit dem Strangpressprofil 15 verbunden sein. Denkbar ist auch, dass die Dichtung 6 mit dem Strangpressprofil 15 verklebt, verschweißt oder in anderer Weise fest verbunden ist.

Generell ist die Dichtung 6 vorzugsweise aus einem elastischen Kunststoff und zusammen mit den Dichtlippen 12 bis 12'" aus einem Stück hergestellt. Darüber hinaus kann die Dichtung 6 zumindest eine, deren Elastizität erhöhende Kammer 19 aufweisen, welche umfangsmäßig geschlossen ist und welche lediglich stirnseitig der Dichtung 6 nach außen offen ausgebildet ist. Eine derartige Kammer 19 reduziert zum einem das Gewicht der Dichtung 6, was beim Sportwagenbau besonders von Bedeutung ist und andererseits schwächt sie einen Querschnitt der Dichtung 6 im Bereich der Kammer 19, wodurch diese in diesem Bereich elastischer wird.

Der seitliche, ausgesteifte Bereich 5 kann dabei einen Metallkern 20, beispielsweise ein Blech aufweisen, welcher die Aussteifung bewirkt. Darüber hinaus kann der ausgesteifte, seitliche Bereich 5 von einem Einfassband 21 eingefasst sein und ein, einen Regenablauf bildendes Element 22 aufweisen. Das Element 22 schützt dabei eine bei Regen ein und aussteigende Person vor direkt vom Verdeck 1 ablaufendem Wasser. Das Einfassband 21 hingegen umfasst den seitlichen Bereich 5 endseitig und macht diesen dadurch robuster. Zusätzlich kann ein Keder 23 vorgesehen sein, der zusammen mit einem im Keder 23 gespannten Seilelement 24 den Randbereich des Überzugs 4 verstärkt. Prinzipiell erlauben dabei der Keder 23 zusammen mit dem darin geführten Seilelement 24 ein flächiges Spannen des Überzugs 4 quer zum Seilelement 24.

Das gemäß Fig. 2 in den vorigen Absätzen beschriebene gilt sinngemäß auch für Fig. 3, wobei in Fig. 3 erkennbar ist, dass das Verdeckgestänge 3, d.h. die seitlichen Dachrahmen 2, jeweils einen Hauptlenker 25 und einen Dachlenker 26 umfassen. Das Strangpressprofil 15 ist dabei vorzugsweise am Dachlenker 26 angeordnet bzw. mit diesem verbunden. Eine der Dichtlippe 12"' gegenüberliegende Dichtlippe 12"" stützt sich dabei gemäß Fig. 3 am Dachlenker 26 ab bzw. liegt an diesem an.

Durch das erfindungsgemäße Verdeck 1 ist es möglich, eine besonders gute Dichtwirkung zwischen dem Überzug 4 und dem, den Dachrahmen 2 bildenden seitlichen Verdeckgestänge 3 zu erzielen, indem die seitlichen Bereiche 5 des Überzugs 4 durch den Metallkern bzw. das Blech 20 verstärkt werden und dadurch besser gegen die Dichtlippen 12, 12' der verdeckgestängeseitigen Dichtung 6 bei geschlossenem Verdeck 1 gedrückt werden können, als dies bei nicht verstärkten seitlichen Randbereichen möglich ist.

## Patentansprüche

1. Verdeck (1) für ein Cabriolet, das in einem rückwärtigen Bereich des Cabriolets ablegbar ist und das zumindest folgende Komponenten aufweist:
- jeweils seitlich ein, einen seitlichen Dachrahmen (2) bildendes Verdeckgestänge (3),
- einen, bei geschlossenem Verdeck (1) aufgespannten flexiblen Überzug (4), der zumindest Teile des Verdecks (1) überzieht,
**dadurch gekennzeichnet,**
- **dass** ein Überzug (4) des Verdecks (1) ausgesteifte seitliche Bereiche (5) aufweist, die dem zugehörigen seitlichen Dachrahmen (2) zugewandt sind,
- **dass** bei geschlossenem Verdeck (1) zwischen dem ausgesteiften Bereich (5) des aufgespannten Überzugs (4) und dem zugehörigen seitlichen Dachrahmen (2) eine Dichtung (6) angeordnet ist.

2. Verdeck nach Anspruch 1, **dadurch gekennzeichnet, dass** das Verdeck (1) den Überzug (4) flächig aufspannende und aussteifende Spannelemente (7) aufweist,

3. Verdeck nach Anspruch 2, **dadurch gekennzeichnet, dass** das Verdeck (1) insgesamt vier, den Überzug (4) flächig aufspannende Spannelemente (7) aufweist, wobei das in Fahrtrichtung vorderste Spannelement als Integraldachrahmen (8), die direkt dahinter gelegenen Spannelemente als erster und zweiter Flächenspriegel (9, 10) und das in Fahrtrichtung hinterste Spannelement als Heckscheibenrahmen (11) mit einer Heckscheibe ausgebildet sind.

4. Verdeck nach einem der Ansprüche 1 bis 3, **dadurch gekennzeichnet, dass** die Dichtung (6) zumindest eine, dem ausgesteiften seitlichen Bereich (5) des Überzugs (4) zugewandte Dichtlippe (12, 12') aufweist.

5. Verdeck nach einem der Ansprüche 1 bis 4, **dadurch gekennzeichnet, dass** die Dichtung (6) zwei sich gegenüberliegende Dichtlippen (12", 12"') aufweist, die eine U-förmige, dachrahmenseitige Aufnahme (13) verschließen, in die eine Seitenscheibe (14) bei geschlossenem Verdeck (1) eingreifen kann, wobei bei geschlossenem Verdeck (1) und bei geschlossener Seitenscheibe (14) die sich gegenüberliegenden Dichtlippen (12", 12"') innen und außen an die Seitenscheibe (14) anliegen.

6. Verdeck nach Anspruch 5, **dadurch gekennzeichnet, dass** die Dichtung (6) ein, die dachrahmenseitige Aufnahme (13) für die Seitenscheibe 814) bildendes Strangpressprofil (15) formschlüssig umgreift.

7. Verdeck nach einem der Ansprüche 1 bis 6, **dadurch gekennzeichnet, dass** die seitlichen Dachrahmen (2) jeweils einen Hauptlenker (25) und einen Dachlenker (26) umfassen.

8. Verdeck nach einem der Ansprüche 1 bis 7, **dadurch gekennzeichnet, dass** an dem Überzug (4) jeweils seitlich ein, einen Regenablauf bildendes Element (22) angeordnet ist.

9. Verdeck nach einem der Ansprüche 1 bis 8, **dadurch gekennzeichnet, dass** die Dichtung (6) zumindest eine, deren Elastizität erhöhende Kammer (19) aufweist.

10. Verdeck nach einem der Ansprüche 4 bis 9, **dadurch gekennzeichnet,**
- **dass** die Dichtung (6) zusammen mit den Dichtlippen (12, 12', 12", 12"', 12"") aus einem Stück hergestellt ist, und/oder
- **dass** die Dichtung (6) über ein Hinterschnittprofil (18) mit dem Strangpressprofil (15) verbunden ist, und/oder
- **dass** die Dichtung (6) mit dem Strangpressprofil (15) verklebt oder verschweißt ist.
